# EUROPEAN PATENT APPLICATION

(11) **EP 0 761 623 A2**
(43) Date of publication of application: **12.03.1997**
(21) Application number: 96306228.6
(22) Date of filing: 28.08.1996
(51) Int. Cl.: C04B 37/00, C04B 37/02

(54) **Diamond assembly**

(30) Priority: 31.08.1995 US 521900
(71) Applicant: GENERAL ELECTRIC COMPANY, Schenectady, NY 12345 (US)
(72) Inventor: Knemeyer, Friedel Siegfried, Granville, Ohio 43023 (US); Williams, Bradley Earl, Worthington, Ohio 43085 (US)
(74) Representative: Szary, Anne Catherine

(57) **Abstract**

The present invention relates to a diamond window which is mounted to a flange of a vacuum or pressure system using a reactive braze alloy to form a continuous, leak tight attachment.

## Description

The present invention relates to a vacuum or pressure system having a window assembly. More particularly, the present invention relates to a diamond window which is mounted to a flange of the vacuum or pressure system using a reactive braze alloy to form a continuous, leak tight attachment

### BACKGROUND OF THE INVENTION

Vacuum or pressure vessels are extensively used in scientific investigation and in production in a great many different processes. For many operations, it is desirable to attach a window assembly to the vacuum or pressure chamber to directly observe the reaction occurred in the vacuum or pressure vessel. The application demands such window assembly of very high reliability operating under high pressure or vacuum conditions.

Diamond has long been recognized as a superior material as a result of its rare combination of advantageous properties. The thermal conductivity of diamond at room temperature is the highest of all known materials. It is a factor of five greater than that of copper and over a factor of ten greater than those of other thermal ceramics. Diamond is transparent to electromagnetic radiation over a wide spectral range, from 220 nm wavelength in the ultraviolet to the far infrared and over much of the microwave radar frequencies. Diamond is also the hardest known material and is relatively inert to chemical attack by even the most aggressive acid or base reagents. These properties make diamond a key component in applications requiring thermal management or for optical components transmitting over a wide spectral range in adverse environment

A new diamond synthesis technique base on Chemical Vapor Deposition (CVD) has been developed to produce large area, high quality polycrystalline diamond plates. This technique removes many of the limitations in terms of size and cost of natural diamond and opens new and exciting opportunities for diamond as an advanced engineering material.

Chemical Vapor Deposition is a diamond synthesis process in which mixtures of carbon based gases and hydrogen are dissociated by strong electrical discharges or high temperature elements to deposit layers of fully dense polycrystalline diamond on specially prepared substrates. As there is no need to use metallic solvent catalysts, CVD diamond layers are free from metallic impurities. The thermal stability of the material is, therefore, similar to that of high quality natural diamond.

One area of technology in which the exceptional combination of properties exhibited by CVD diamond can be best utilized is undoubtedly that of optical windows for applications such as windows or domes for infrared thermal imaging systems, windows for "dual band" (visible-infrared) systems, windows or mirrors for high power lasers, mirrors for free-electron lasers, windows for high vacuum interrogation ports, components for space applications, windows for use in the monitoring of aggressive chemical processes and windows for infrared synchrotron radiation.

Attaching a diamond component to metal in a rigid, leak tight manner can be problematic. According to a conventional method of this type the metal to which the diamond part has been attached is heated to the brazing temperature of the brazing material, by resistance heating or electromagnetic heating, for example. In the first place problems occur in view of the different coefficients of expansion of the materials used. Further, deformation of the metal occurs easily. These problems are enhanced because the method is usually applied to vulnerable parts.

Prior art shows various methods of overcoming this problems. For example, US. Patent No. 4,705,933 issued to van Bennekom et al. teaches a method for attaching a diamond component to metal, wherein a layer of brazing material is provided at the interface between the diamond and the metal. A laser is used for heating the brazing material. The laser beam is focused through the diamond at least substantially on the interface between the diamond and the metal. This avoids the thermal expansion problem since only a localized heating zone occurs. However, this method has the disadvantage of not being as cost-effective as conventional furnace brazing. In addition, it is not clear that this method would provide the high adhesion strengths necessary for certain high temperature, high pressure applications.

US. Patent No. 4,768,011 issued to Hattori et al. teaches a pressure detector having a cylindrical housing projecting into an atmosphere the pressure of which is to be measured, a pressure chamber formed within the housing, to which the pressure to be measured is introduced, a metallic diaphragm formed on a surface of one portion of a wall defining the pressure chamber, which deforms in accordance with changes in the pressure which is to be measured, and a strain gauge provided in the diaphragm. The strain gauge is composed of a diamond monocrystal plate and a diamond semiconductor film formed on the diamond monocrystal plate. On the diamond monocrystal plate are deposited a titanium film, a platinum film, and a gold film, in sequence the gold film is joined to the diaphragm by brazing. The diamond layer is not directly attached to the metal. A primary disadvantage of the method taught by Hattori is that the metallization system of TiPtAu will not maintain reasonable adhesion to the diamond film after being subjected to elevated temperatures for extended times. Also, this metallization system is best suited for low temperature applications.

### SUMMARY OF THE INVENTION

It is an object of the present invention to design a pressure or vacuum system having a window assembly.

It is another object of the present invention to attach a diamond window to the pressure or vacuum system using a high temperature high strength filler metal.

It is also another object of the present invention to attach the diamond window to the pressure or vacuum system in a rigid, leak tight manner.

In accordance with the present invention there is provided a pressure or vacuum system having a window assembly, comprising a conventional pressure or vacuum system having a non-diamond flange, a diamond film being brazed to the non-diamond flange of the pressure or vacuum system by a high temperature, high strength filler metal in a leak-tight manner.

The present invention also provides a method for making a pressure or vacuum system having a window assembly, comprising the steps of (1) providing a conventional pressure or vacuum system having a non-diamond flange, (2) providing a diamond film, and (3) brazing the diamond film to the flange of the pressure or vacuum system with a high temperature, high strength filler metal in a leak-tight manner.

### BRIEF DESCRIPTION OF THE DRAWINGS

In the drawings which illustrate the preferred embodiment of the invention:

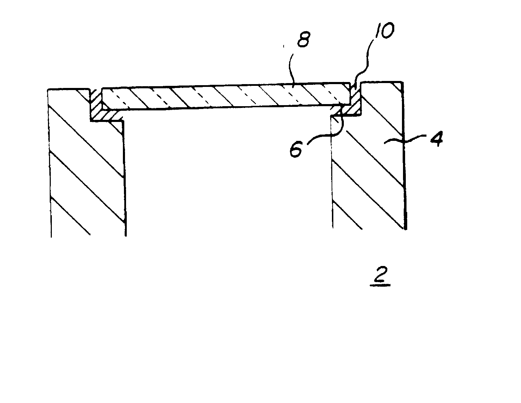

FIG. 1 is a cross-sectional view showing a diamond film being attached to a flange of a pressure or vacuum system.

### DETAILED DESCRIPTION OF THE INVENTION

FIG. 1 is a cross-sectional view illustrating a portion of a pressure or vacuum system 2 having a non-diamond flange 4 with a circular top connecting face 6 for receiving a free-standing diamond film 8. The flange 4 preferably is composed of metal having a thermal expansion coefficient similar to that of the diamond so that no cracks occur in the alloy bond or diamond layer upon cooling to room temperature. The flange 4 is made preferably of molybdenum, or other metals such as tungsten, niobium, platinum, rhenium and tantalum. The flange 4 can also be made of certain metal alloys or ceramic materials. Such flange 4 is well-known in the pressure or vacuum system trade, is normally provided in many different overall diameters, and is often referred to as a Conflat® type flange.

Typically, processes for producing low pressure CVD diamond comprises microwave CVD, RFCVD, DC jet CVD, combustion flame CVD, or hot filament CVD. For short deposition time, the preferred process of the present invention is a microwave process. A filament process for forming a CVD diamond substrate as set forth in US. Patent No.5,110,579 issued to Anthony et al. can also be utilized. According to the processes set forth in the patent, diamond is grown by chemical vapor deposition on a substrate by passing a mixture of methane and hydrogen over a filament for an appropriate length of time to form a film of the desired thickness.

The conditions during deposition are uniformly maintained to obtain optically transparent diamond. Preferably the reactants are selected so as to maintain impurities at a very low level and the diamond CVD film consists entirely of diamond. Additional ingredients in the form of impurities and intentional additives may be present in amounts less than 4000 parts per million by weight, and more preferably less than 100 parts per million. The low level of impurities contributes to enhance the properties of the final CVD diamond. It is desirable to maintain a suitable substrate temperature and volume percent hydrogen based on the total volume of hydrogen and methane in the mixture at a suitable volume percent of hydrogen for saturating unsaturated carbon to rendering the film transparent Preferred substrate temperatures are from about 600°C. to about 1100°C, and more preferably from about 750°C. to about 1000°C. Preferred percentages of methane or hydrogen are from 0.2% to about 10%, and more preferably from about 1% to about 5% based on volume.

The crystal size of the CVD diamond can vary greatly and is dependent on the nucleation of diamond. With a continued nucleation during the deposition process, submicron crystals of diamond can be attained. When the nucleation is limited to an initial nucleation at the substrate, elongated diamond crystals up to the thickness of the diamond layer can be formed. The diamond film is then cut by laser or other means, shaped into desired size, and cleaned to remove non-diamond residue. The diamond film can also be polished to minimize surface scattering.

FIG. 1 shows a thin, continuous layer 10 of filler metal (shown disproportionately large for purposes of illustration) disposed between and bonding the diamond film 8 to the flange 4. The diamond film 8 is brazed on the circular top connecting face 6 while lying against each other.

Brazing is defined as a group of welding processes wherein coalescence is produced by heating to suitable temperature over 800°F. and by using a brazing filler metal having a melting point below that of the material of the flange 4. The filler metal is distributed between the closely fitted surfaces of the joint by capillary action.

Filler metal is defined as brazing filler metals and other metals or alloys used in bonding techniques such as diffusion bonding, hot pressing, resistance welding and the like.

A brazing filler metal is defined as a metal or alloy to be added when making a braze and having melting temperature above 450°C. (but below those of the metals being joined).

Complicating the filler metal selection is the fact that the filler metal must not only be suitable for joining the diamond film 8 to the non-diamond flange 4, but it must also be capable of withstanding subsequent manufacturing and operating conditions. That is, the filler metal must be a high strength brazing filler metal having a liquidus greater than 700°C. The filler metal must have high wettability so that it spreads evenly in the joint in a rigid, leak tight manner.

A new alloy which is preferred for the fabrication of the present invention is Nioro-ABA® from Wesgo. This alloy has 15.5% Ni, 0.75% Mo, 1.75% V, and 82% Au. With this alloy we have achieved exceptional bond strengths which are typically greater than 60,000 psi adhesion strength. A key advantage of this alloy is the ability to adhere directly to diamond without any prior metallization. In addition, this filler metal has provided good adhesion to tungsten carbide, molybdenum, and stainless steel. Another advantage is the low vapor pressure, and absence of materials such as lead, tin, and other materials which might be considered contaminants in certain process applications. It is expected that other ABA® alloys such as Gold-ABA®, Copper-ABA®, Silver-ABA® and Cusin1-ABA® can also be employed in this window assembly.

Silver filler metals can also be used in the present invention. One example of the silver filler metals is disclosed in US. Patent No. 4,239,502 issued to Slack et al, which has 94% silver, 3% manganese and 3% zirconium. The particular alloy composition has a melting temperature of about 955°C.

Due to its high index of refraction (2.38 at 10.6 microns), diamond necessarily has high reflection losses in vacuum and atmosphere. This typically means about 29% of the incident light is reflected back toward the source. This reflection can be lessened by the use of antireflection (AR) coatings, which typically have a graded index to reduce the reflection down to less than 1%. However, these coatings have the disadvantage of poor temperature stability, and they typically degrade if exposed to temperatures above 300°C for more than a few seconds. In addition, these AR coatings also do not have the chemical inertness of diamond, so in aggressive or reactive environments they may not last for any significant time. Another method to reduce the reflection losses is to tilt the window to the Brewster angle. This can effectively reduce the reflection to zero provided the incident light is polarized. However, a disadvantage of using a diamond Brewster window is that due to the large angle involved, the viewing area is greatly reduced. Thus a larger and much more expensive diamond window is required to achieve the same viewing area.

A preferred embodiment of the method for making the pressure or vacuum system is set forth below. A thin layer of a brazing filler metal 10 is applied directly to the circular top connecting face 6 of the flange in order to enhance the wetability of this surface. Alternatively, it will be recognized by those skilled in the art that a shim or powder mixture of brazing filler metal can be positioned between the diamond film 8 and the circular top connecting face 6 of the flange 4. The entire assembly is heated to a temperature above the melting point of the filler metal for a short period of time, and then cooled down to room temperature.

In order that those skilled in the art will be better able to practice the present invention, the following example is given by way of illustration and not by way of limitation.

### EXAMPLE

A 10 mm diameter by 250 micron thick diamond window was polished on both sides to a finish of less than 0.2 micron R_{A}. The diamond was cleaned in acid to remove all surface contamination. A molybdenum flange was machined to an outer diameter of 10 mm with a 9 mm diameter ledge to support the diamond window. A ring of braze metal (NiORO-ABA, available from Wesgo, Inc.) was cut using a laser. The metal ring was placed in contact with the molybdenum flange. The diamond window was then placed in direct contact with the braze metal.

The entire assembly was then placed into a vacuum chamber and subjected to a brazing cycle of 1025°C. for 3 minutes, followed by a slow cool down to room temperature.

Inspection of the brazed diamond window showed excellent wetting of both the diamond and the molybdenum. The window assembly was leak tested. The leak rate was below the limit of the defector. (<1x10⁻⁶ sccm/sec).

Accordingly, while the invention has been shown and described in connection with certain preferred embodiments, other embodiments and modifications will be apparent to those skilled in the art It is intended that the appended claims cover all such embodiments and modifications as are within the true spirit and scope of this invention.

## Claims

1. A window assembly, comprising
(1) a nondiamond flange formed on a surface of one portion of a wall defining said system;
(2) a diamond film being joined to said nondiamond flange; and
(3) a metal filler interposed between said nondiamond flange and said diamond film; wherein said diamond film is brazed to said nondiamond flange in a leak-tight manner.

2. The window assembly of Claim 1, wherein said nondiamond flange is made of a metal consisting essentially of molybdenum, tungsten, niobium, platinum, rhenium, tantalum and mixtures thereof.

3. The window assembly of Claim I, wherein said nondiamond flange is made of a ceramic.

4. The window assembly of Claim 1, wherein said filler metal has a melting temperature above 450°C.

5. The window assembly of Claim 1, wherein said filler metal is an alloy comprising 15.5% Ni, 0.75% Mo, 1.75% V and 82% Au.

6. The window assembly of Claim 1, wherein said metal filler is a silver filler metal.

7. The window assembly of Claim 1, wherein said window assembly can be subject to a pressure above or below atmospheric for an extended period of time.

8. A method for making a window assembly, comprising the steps of
(1) depositing a filler metal on a nondiamond flange formed on a surface of one portion of a wall defining the system;
(2) attaching a diamond film on the filler metal;
(3) heating said assembly to a temperable above the melting point of the filler metal; and
(4) cooling down the window assembly to room temperature.

9. The method of Claim 8, wherein the diamond film is brazed to the nondiamond flange in a leak-tight manner.

10. The method of Claim 8, wherein the window assembly can be subject to a pressure above or below atmospheric for an extended period of time.
